# EUROPEAN PATENT SPECIFICATION

(11) **EP 0 549 153 B1**
(45) Date of publication and mention of the grant of the patent: **19.03.1997**
(21) Application number: 92310963.1
(22) Date of filing: 01.12.1992
(51) Int. Cl.: G11B 20/12, G11B 27/30

(54) **Sector mark detection for optical data disks**
Erfassung der Sektormarkierungen für optische Datenplatten
Détection des marques de secteur pour disques de données optiques

(30) Priority: 24.12.1991 US 810574
(43) Date of publication of application: 30.06.1993
(73) Proprietor: ADVANCED MICRO DEVICES, INC., Sunnyvale, CA 94088-3453 (US)
(72) Inventor: Masood, Shakeel, Sunnyvale, California 94086 (US); Li, George, Sunnyvale, California 94087 (US)
(74) Representative: Wright, Hugh Ronald

(56) References cited:
- EP-A- 0 158 219
- EP-A- 0 318 227
- EP-A- 0 409 649
- EP-A- 0 461 912
- WO-A-90/09664
- PATENT ABSTRACTS OF JAPAN vol. 9, no. 90 (P-350)(1813) 19 April 1985
- PATENT ABSTRACTS OF JAPAN vol. 8, no. 10 (P-248)18 January 1984

## Description

This invention is related generally to detection of data prerecorded on optical data disks, such as asynchronous detection of the sector mark (SM) embedded in long burn data within the preformatted area of a track sector.

Optical disk media are capable of storing a considerable amount of data in the form of small marks or holes in the surface of the disk, each representing a bit of data. The marks, burned into the surface of the disk by a laser, are arranged along spiral tracks, each divided into a number of sectors.

Figure 8 is a diagram of an apparatus 10 for reading data prerecorded on an optical disk 12. The disk 12 is rotated by a disk servo 14 comprising a precisely controllable DC motor. A laser 16 irradiates the surface of the disk 12, and light reflected from the disk impinges on the surface of a detector 18. An optical head 20, located between the disk 12 and laser/detector 16, 18, is positioned by another servo (not shown) to read data from a desired track. Writing is carried out using similar optics, with the optical medium being preheated to enable light from laser 16 to form surface marks corresponding to data. The servos and laser/detector are controlled by a microprocessor-based controller 22 .

The apparatus 10 shown in Figure 8 typically is located within a common housing, such as provided by SCSI (Small Computer System Interface) resident at a personal computer or other computer requiring storage of a large quantity of data. The data storage capacity of the disk 12 is enhanced in some systems by utilizing both sides of a disk such as a 130mm (5 1/4 inch) optical disk.

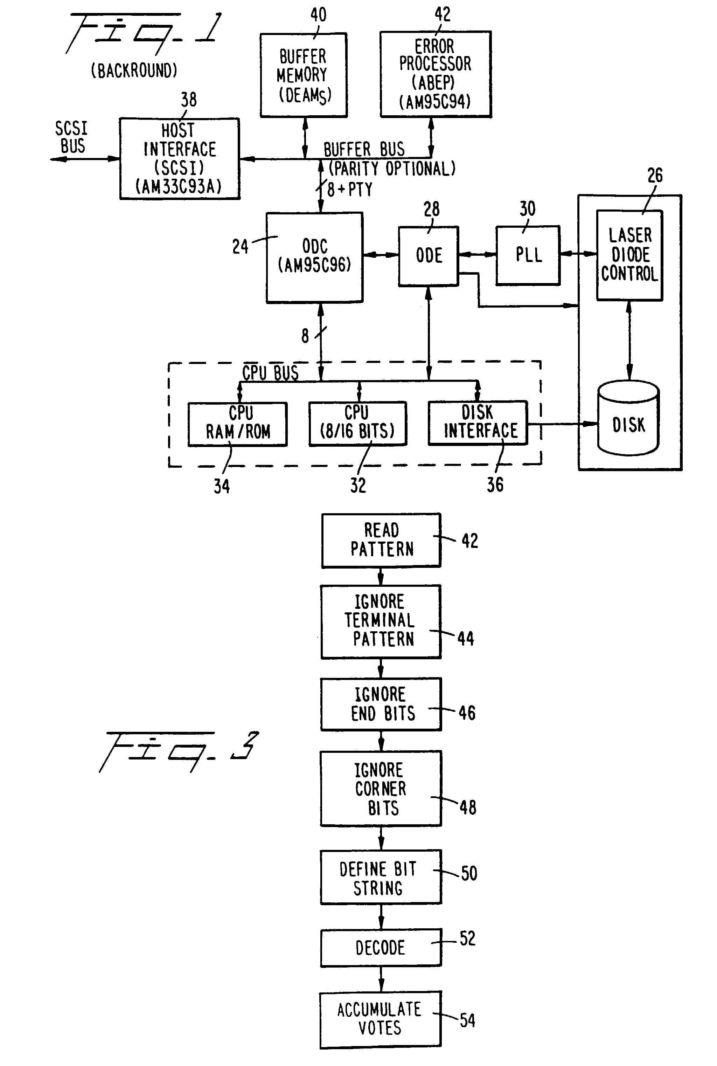

Data read and write logic, implemented by microprocessor-based controller 22 in the representative illustration of Figure 8, has been carried out by commercially available special function integrated circuits, such as the AM95C96 optical disk controller (ODC), manufactured by Advanced Micro Devices of Sunnyvale, California. A system implementing the AM95C96, as shown in Figure 1, comprises ODC 24 reading data through an encoder/decoder (ODE) 28 and a phase locked loop (PLL) 30 off the optical disk and writing to the optical disk. A CPU 32 controls seeking to the desired location on the disk. The ODC/ODE 24, 28 interfaces with CPU 32, working memory 34 and a disk interface 36 to process the applied data signals and transfer commands for compliance with particular specifications such as the X3B11 continuous composite servo (CCS), WORM/ERASABLE optical format developed by ANSI.

The ODC 24 is interfaced to a system bus by host interface unit 38, and is supported by buffer memory 40 and error processor 42. General operation of the system shown in Figure 1, being known to the prior art, is for brevity not described in detail.

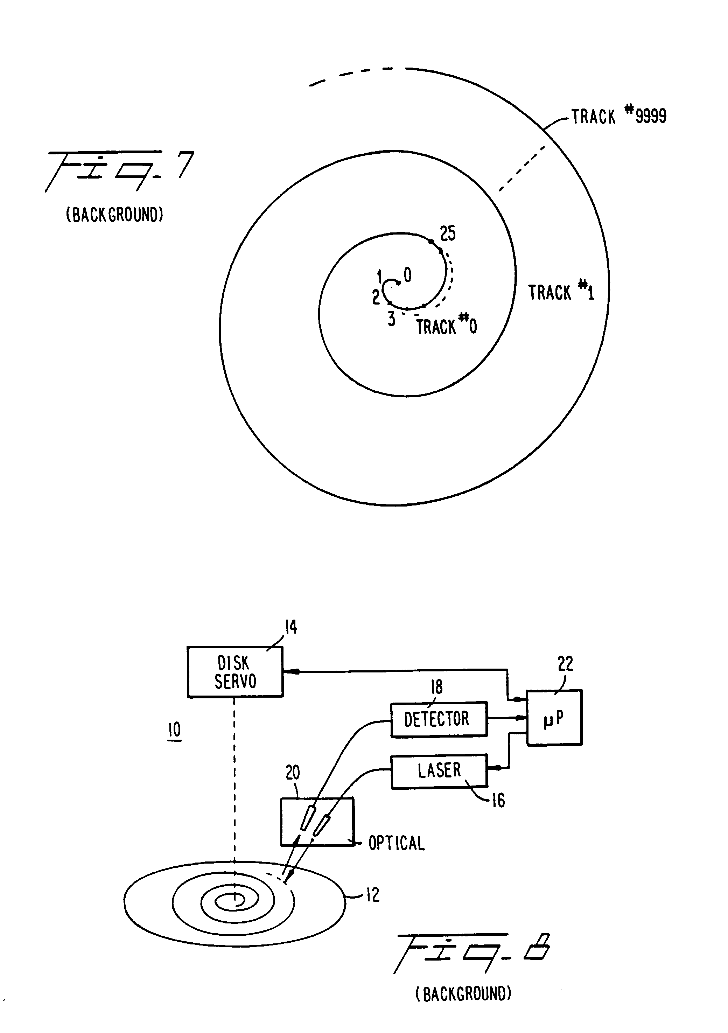

Figure 7 depicts the layout of tracks on an optical disk. The tracks are arranged along a spiral path on the surface of the disk 12, wherein each turn of the spiral is treated as a separate track. In one example, the optical disk may be 90mm in diameter, and may contain 10,000 tracks (numbered 0-9999 in Figure 7); each track is divided into twenty-five (25) sectors. Each sector in turn will carry 725 bytes of unformatted data. The optical disk in this example thus is capable of storing 181,250,000 bytes of data, equivalent to about 100,000 pages of text. Modifications include implementing more densely packed sectors, larger diameter disks and/or double-sided storage for enhanced information storage capacity.

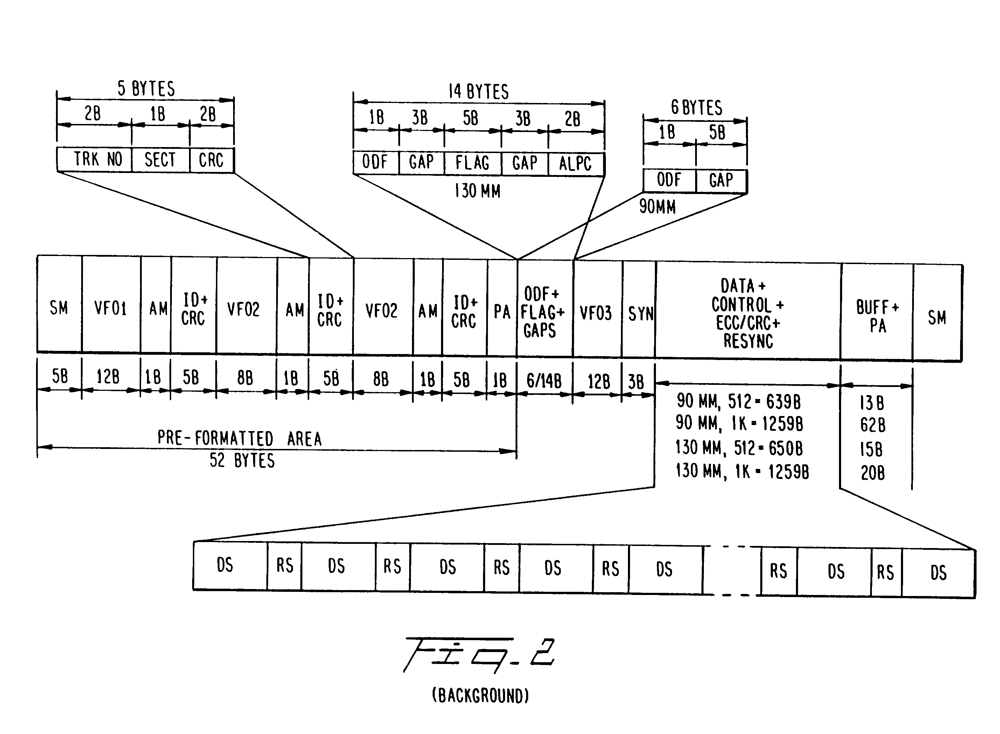

Figure 2 is a diagram of the X3B11 format, comprising a header area that is "pre-stamped", followed by a data area for receiving data for storage. The first field of the header is a sector mark (SM), having a special redundant pattern. This field identifies the start of the sectors. The SM field as well as the other fields constituting the X3B11 format is summarized in Table I below.

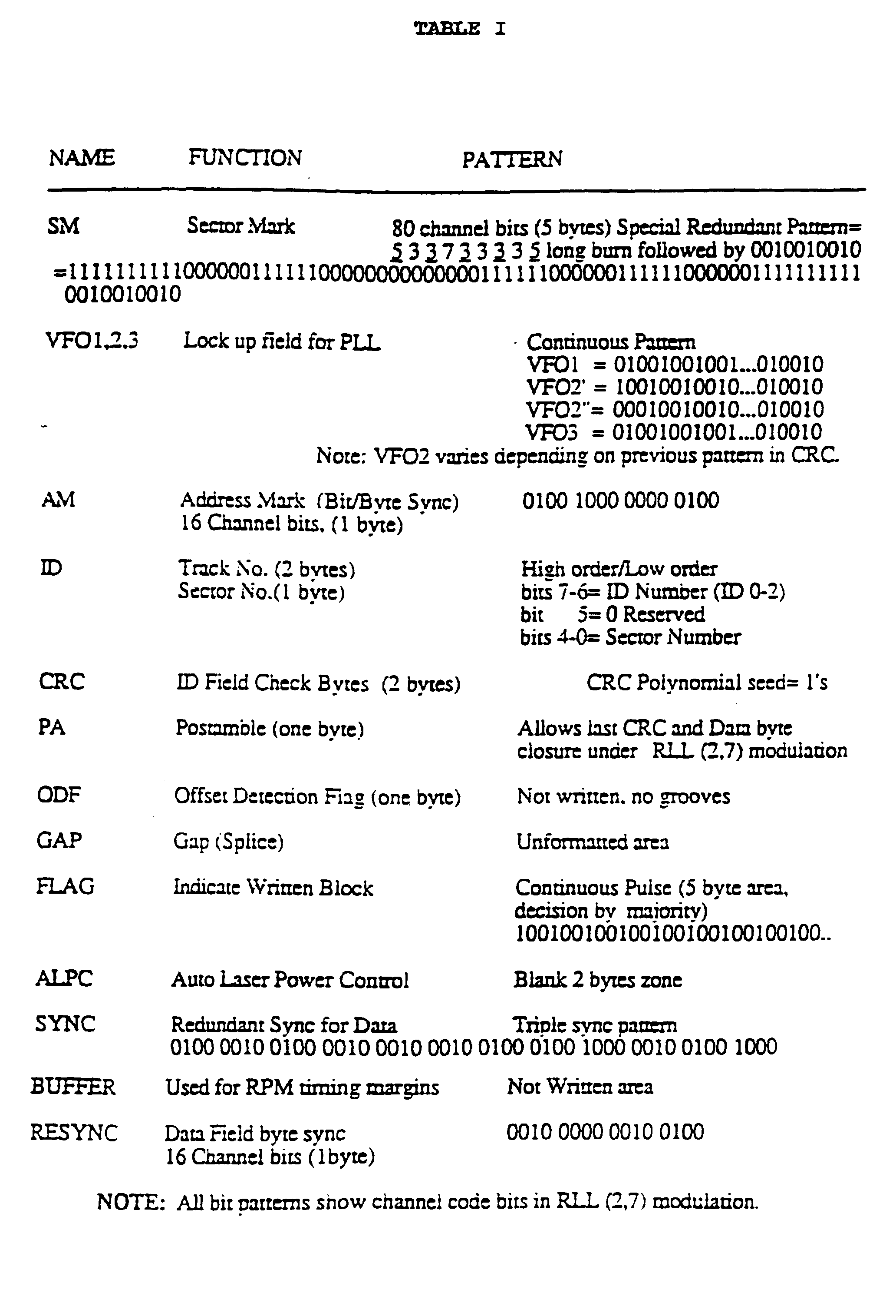

During both reading and writing operations, ODE 26 detects sector mark (SM) once within each sector. Referring to Table I, the sector mark comprises 80 bits arranged as a long burn followed by a transition pattern. It is necessary to detect the sector mark dynamically during reading and writing in order to identify the start of each sector. This requires robust decoding of the long burn pattern.

Sector mark decoding may be carried out by monitoring strings of ones in the long burn pattern. This approach is not robust, however, because it will tend not to respond to sector mark patterns that deviate only slightly from the specified pattern. This is troublesome, as all bits of the sector mark pattern often will not be detectable as a result of imperfections in the optical medium, etc.

EP-A-0 461 912 discloses a method of detecting a sector mark within a track of an optical disk, wherein said sector mark consists of data patterns, by detecting said patterns and counting, in a majority logic circuit, the pulses indicating detection of said patterns. If the count exceeds a preset number, they are verified as the sector mark.

The present invention is an improved sector mark detection algorithm that is more robust.

The invention provides improved sector mark pattern detection methods as defined in appended claims 1 and 6 and an apparatus as defined in appended claim 8.

We will describe an arrangement in which, the long burn pattern, prerecorded on the disk, is optically detected, and transitions between strings of 1 bits and 0 bits forming the pattern are identified. The "corner bits", constituting the first 1 bit and first 0 bit of each transition, are ignored, and adjacent strings of 1 bits and 0 bits are paired. Each pair of adjacent strings of 1 bits and 0 bits is compared with corresponding predetermined bits to establish a vote. The number of votes is evaluated to detect the presence of a sector mark within the optically detected pattern. Preferably, the number of votes required for detecting a sector mark is pre-selectable by the user. This enables the degree of robustness of the detection algorithm, and, hence, of the method and apparatus, to be made to conform to particular user requirements.

In accordance with a preferred embodiment, the terminal portion of the long burn pattern, constituting a transition to the VFO1 field within X3B11 specification, is ignored. The first and last bits, together with preselected corner bits, of the remaining pattern are ignored. A decoder in the form of a number of comparators compares strings of 1 bits and 0 bits adjacent the corner bits with predetermined patterns of bits. The result of each comparison is supplied to voting logic circuitry.

In the embodiment described, the sector mark preferably comprises 80 bits (5 bytes, wherein 16 bits of data constitute each byte). The bits that remain after ignoring the terminal bits, the first bit, last bit and corner bits of the long burn pattern, comprise 68. The decoder compares five adjacent strings of 1 and 0 bits, and the voting logic has a threshold that is programmable by the user as 3/5 or 4/5 to identify a sector mark.

### Brief Description of Drawings

Figure 1 is a block diagram of an optical disk controller including an ODE unit of a type to which the sector mark detection algorithm of the present invention may be applied.

Figure 2 is a diagram showing X3B11 data format utilized in the preferred embodiment.

Figure 3 is a simplified flow chart depicting the sequence of steps for implementing the inventive sector mark detection algorithm.

Figure 4 shows truncation of terminal bits from the long burn pattern for storage in a register.

Figure 5 shows stripping of corner bits from the pattern, stored in the register of Figure 4, to be applied to voting logic.

Figure 5a is a diagram of a comparator circuit for implementing decoding.

Figure 6 is a simplified block diagram of circuitry for implementing the algorithm.

Figure 7 is a diagram showing field format of an optical data disk; and

Figure 8 is a simplified diagram of an optical disk read/write system.

Figure 9 is a diagram of a waveform characterizing a sector mark pattern in accordance with X3B11 specifications.

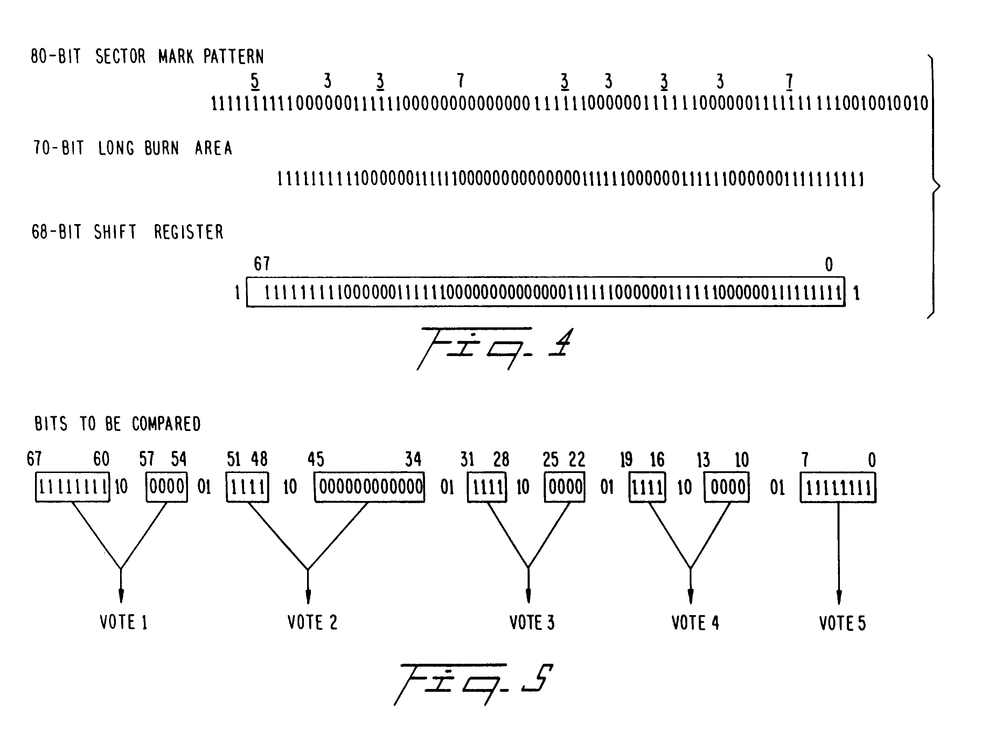

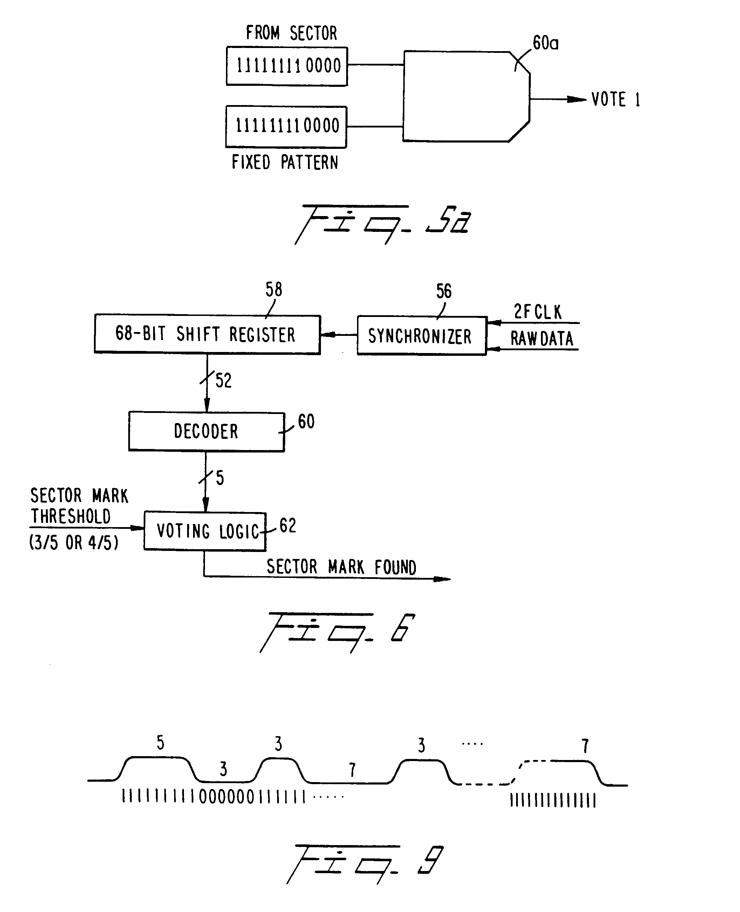

Referring to Figures 3 and 4, the sequence of steps for carrying out sector mark detection, in accordance with this invention, is summarized. Data which may or may not include the 80 bit sector mark pattern specified by X3B11 is first read from the surface of the optical disk as depicted in Figure 3 (step 42). The last ten bits of the X3B11 format sector mark pattern, shown in Figure 4, which comprise bits not characteristic to the sector mark pattern for transition to the VF01 field, are ignored. This preferably will be carried out by software (step 44).

The long burn area at this point in the sequence of steps comprises 70 bits. The end bits of the pattern, that is, the first and last bits, are next ignored in step 46. These bits are unnecessary, because since detection of the sector mark pattern is asynchronous, the leading and trailing edges of the first and last bits, forming amplitude transitions in the long burn pattern, cannot reliably be detected as symbolized in Figure 9. The resultant 68 bit pattern shown in Figure 4 is stored in a register.

The corner bits, i.e., the first and last bits of each string of 1 bits and 0 bits of the pattern, are ignored, as shown in Figure 5 and specified by step 48. The corner bits are unnecessary, as like the end bits of the pattern, they are not able to be asynchronously detected reliably.

Adjacent strings of 1 bits and 0 bits are "paired" in step 50, and decoded by comparing the two strings with predetermined data (step 52). That is, a first comparison will compare bits 54-57, 60-67 with the fixed pattern 111111110000, as shown in Figure 5a. If there is a match, a first vote is indicated. Simultaneously, bits 22-25, 28-31 will be compared with the bits 00001111, and if there is a match, another vote is generated. The final vote compares bits 0-7 with data 11111111; there is no pairing since bits 0-7 are residual bits. This technique suggests sampling the entire pattern every bit time, i.e., a "snapshot" approach.

The number of votes accumulated in step 54 is counted and compared to a voting threshold that is programmable by the user.

In accordance with the preferred embodiment, the voting logic threshold is programmable so that 3/5 or 4/5 votes, selectively, are considered sufficient to indicate a detection of a sector mark in the long burn pattern. As a matter of practice, the user may initially select a 4/5 majority as the voting threshold. If no sector mark is found during scanning of a long burn pattern of an optical disk, the user will reduce the voting threshold to a 3/5 majority. In this example, the higher threshold may have been found to be too selective as a result of defects in the recorded bit pattern, whereas the lower threshold may reliably detect a sector mark pattern obfuscated somewhat by surface defects.

Figure 6 depicts circuitry for implementing the algorithm of Figure 3. The circuitry may be implemented by the conventional system of Figure 1 but preferably is integrated within an IODC of a type described in copending EP-A-0 549 152. The IODC, in essence, carries out the functions of ODC 24 and ODE 28 of Figure 1. The raw data read from the optical disk, being asynchronous, is synchronized by a synchronizer 56 to a 2FCLK clock signal and is supplied to a 68 bit shift register 58. However, sector mark detection is carried out in parallel at every bit time by decoder 60, preferably implemented by a plurality of comparators 60a of a type shown in Figure 5a, together with conventional voting logic circuitry 62. The voting logic circuitry 62, which is conventional, implemented preferably by hard-wired logic circuitry but alternatively by programmable array logic or software, is programmable by applying to it a sector mark threshold signal, selected by the user.

This invention accordingly detects the sector mark pattern embedded within a long burn data pattern in a track of an optical data disk. The algorithm, implemented by the invention, uses variable threshold voting circuitry to program robustness of detection of the desired pattern.

Although functions for carrying out sector mark detection are described as being in the form of hardware elements in the preferred embodiment, software implementation is possible as well.

## Claims

1. A method of asynchronously detecting a sector mark within a track of an optical disk, wherein said sector mark is characterized by a predefined pattern of alternating strings of one bits and zero bits, comprising the steps of:
detecting transitions between said strings of one bits and zero bits forming said pattern;
ignoring the corner bits of the pattern at each transition detected in the preceding step;
pairing adjacent strings of one bits and zero bits remaining after the preceding step;
comparing each pair of adjacent strings of said remaining one bits and zero bits with a corresponding predetermined pattern of bits to establish a vote; and
evaluating the number of votes obtained in the preceding step to detect a sector mark.

2. The method of claim 1, wherein the number of votes required for detecting a sector mark is pre-selectable.

3. The method of claim 1, including the step of ignoring bits from a terminal portion of said pattern.

4. The method of claim 1, including the step of further ignoring the first and last bits of said pattern.

5. The method of claim 1, wherein said pattern comprises an eighty-bit sector mark pattern.

6. A method of asynchronously detecting a sector mark within a track of an optical disk, wherein said sector mark is characterized by a predefined pattern of alternating series of strings of one and zero bits, comprising the steps of:
preconditioning said pattern of bits by detecting transitions between said strings of one bits and zero bits forming said pattern, and ignoring from said pattern the corner bits at each said transition;
storing said pattern of bits, preconditioned in the preceding step, in a register;
comparing each pair of adjacent strings of one bits and zero bits stored in said register with a corresponding predetermined pattern of bits to establish a vote; and
evaluating the number of votes obtained in the preceding step to detect a sector mark.

7. The method of claim 6, wherein said step of evaluating includes predefining a threshold number of votes constituting a detection of a sector mark.

8. Apparatus for asynchronously detecting a sector mark having a predefined pattern of bits from among bits read from a track of an optical disk (12), comprising:
a shift register (58);
means for receiving said bits read from said optical disk track, ignoring corner bits at transitions between adjacent series of one bits and zero bits and storing remaining bits in said shift register;
comparator means (60, 60a) for comparing adjacent strings of one bits and zero bits stored in said shift register with corresponding bit patterns, and, in response, providing particular output signals; and
voting logic circuitry (62) for supplying a sector mark found signal in accordance with said output signals obtained from said comparator means.

9. The apparatus of claim 8, wherein said voting logic circuitry is programmable to supply said sector mark signal in response to a preselected number of matches detected by said comparator means.

10. The apparatus of claim 8, wherein said first recited means ignores a terminal portion of said pattern read from said optical disk track.

11. The apparatus of claim 8, wherein said pattern read from said optical disk is an 80-bit pattern, and said register comprises 68 stages.

12. The apparatus of claim 9, wherein said particular output signals comprise five signals, and said voting logic circuitry is programmable as 3/5 or 4/5 matches.

## Patentansprüche

1. Verfahren zum asynchronen Detektieren einer Sektormarkierung innerhalb einer Spur auf einer optischen Platte, bei dem die Sektormarkierung durch ein vordefiniertes Muster alternierender Folgen von Eins-Bits und Null-Bits gekennzeichnet ist, mit den folgenden Schritten:
Detektieren von Übergängen zwischen den das Muster bildenden Folgen von Eins-Bits und Null-Bits;
Ignorieren der Eck-Bits des Musters an jedem in dem vorhergehenden Schritt detektierten Übergang;
Paaren benachbarter Folgen von Eins-Bits und Null-Bits, die nach dem vorhergehenden Schritt verbleiben;
Vergleichen jedes Paares benachbarter Folgen der verbleibenden Eins-Bits und Null-Bits mit einem entsprechenden vorbestimmten Muster von Bits zwecks Erstellen einer Votierung; und
Bewerten der Anzahl der in dem vorhergehenden Schritt erhaltenen Votierungen, um eine Sektormarkierung zu detektieren.

2. Verfahren nach Anspruch 1, bei dem die Anzahl der zum Detektieren einer Sektormarkierung erforderlichen Votierungen vorwählbar ist.

3. Verfahren nach Anspruch 1, mit einem Schritt des Ignorierens von Bits aus einem Endabschnitt des Musters.

4. Verfahren nach Anspruch 1, mit einem Schritt des zusätzlichen Ignorierens der ersten und letzten Bits des Musters.

5. Verfahren nach Anspruch 1, bei dem das Muster ein Achtzig-Bit-Sektormarkierungsmuster ist.

6. Verfahren zum asynchronen Detektieren einer Sektormarkierung innerhalb einer Spur auf einer optischen Platte, bei dem die Sektormarkierung durch ein vordefiniertes Muster alternierender Reihen von Folgen von Eins-Bits und Null-Bits gekennzeichnet ist, mit den folgenden Schritten:
Vorkonditionieren des Musters von Bits durch Detektieren von Übergängen zwischen den das Muster bildenden Folgen von Eins-Bits und Null-Bits, und Ignorieren der Eck-Bits bei jedem Übergang des Musters;
Speichern des in dem vorhergehenden Schritt vorkonditionierten Musters von Bits in einem Register;
Vergleichen jedes in dem Register gespeicherten Paares benachbarter Folgen von Eins-Bits und Null-Bits mit einem entsprechenden vorbestimmten Muster von Bits, um eine Votierung herzustellen; und
Bewerten der Anzahl der in dem vorhergehenden Schritt erhaltenen Votierungen, um eine Sektormarkierung zu detektieren.

7. Verfahren nach Anspruch 6, bei dem der Bewertungsschritt das Vordefinieren einer Schwellen-Anzahl von die Detektion einer Sektormarkierung konstituierenden Votierungen enthält.

8. Vorrichtung zum asynchronen Detektieren einer ein vorbestimmtes Muster von Bits aufweisenden Sektormarkierung aus von einer Spur einer optischen Platte (12) ausgelesenen Bits, mit:
einem Schieberegister (58);
einer Einrichtung, die die von der Spur der optischen Platte ausgelesenen Bits empfängt, wobei sie die Eck-Bits an Übergängen zwischen benachbarten Reihen von Eins-Bits und Null-Bits ignoriert und die übrigen Bits in dem Schieberegister speichert;
einer Komparatoreinrichtung (60,60a), die in dem Schieberegister gespeicherte benachbarte Reihen von Eins-Bits und Null-Bits mit entsprechenden Bit-Mustern vergleicht und als Reaktion darauf bestimmte Ausgangssignale erzeugt; und
einer Votierungs-Logikschaltung (60), die entsprechend den aus der Komparatoreinrichtung erhaltenen Ausgangssignalen ein Sektormarkierungs-Auffindungs-Signal ausgibt.

9. Vorrichtung nach Anspruch 8, bei der die Votierungs-Logikschaltung derart programmierbar ist, daß sie das Sektormarkierungs-Auffindungs-Signal als auf eine vorbestimmte Anzahl von der Komparatoreinrichtung detektierter Übereinstimmungen ausgibt.

10. Vorrichtung nach Anspruch 8, bei der die erstgenannte Einrichtung einen Endabschnitt des von der Spur der optischen Platte ausgelesenen Musters ignoriert.

11. Vorrichtung nach Anspruch 8, bei der das von der Spur der optischen Platte ausgelesene Muster ein 80-Bit-Muster ist und das Register 68 Stufen aufweist.

12. Vorrichtung nach Anspruch 9, bei der die genannten Ausgangssignale fünf Signale aufweisen und die Votierungs-Logikschaltung auf 3/5- oder 4/5-Übereinstimmungen programmierbar ist.

## Revendications

1. Procédé de détection asynchrone d'une marque de secteur dans une piste de disque optique, dans lequel ladite marque est caractérisée par une combinaison prédéterminée de suites alternées de binaires 1 et de binaires 0, comprenant les étapes :
- de détection des transitions entre ces suites de binaires 1 et 0 formant la combinaison;
- d'ignorance des binaires d'angle de la combinaison au niveau de chaque transition détectée dans l'étape précédente;
- d'appariation des suites adjacentes de binaires 1 et 0 restant à l'issue de l'étape précédente;
- de comparaison de chaque paire de suites adjacentes des binaires 1 et 0 restant à une combinaison de binaires prédéterminée correspondante afin d'établir un vote; et
- d'évaluation du nombre de votes obtenus dans l'étape précédente afin de détecter une marque de secteur.

2. Procédé selon la revendication 1, dans lequel le nombre de votes nécessaires pour détecter une marque de secteur peut être prédéterminé.

3. Procédé selon la revendication 1, comprenant l'étape d'ignorance des binaires d'une partie terminale de ladite combinaison.

4. Procédé selon la revendication 1, comprenant en outre l'étape d'ignorance du premier et du dernier binaire de la combinaison.

5. Procédé selon la revendication 1, dans lequel la combinaison comprend une combinaison de marque de secteur à huit binaires.

6. Procédé de détection asynchrone d'une marque de secteur dans une piste de disque optique, dans lequel ladite marque est caractérisée par une combinaison prédéterminée de séries alternées de suites de binaires 1 et de binaires 0, comprenant les étapes de :
- préconditionnement de cette combinaison de binaires en détectant les transitions entre les suites de binaires 1 et 0 la formant et ignorant ces binaires d'angle au niveau de chaque transition;
- mémorisation de cette combinaison de binaires, préconditionnée dans l'étape précédente, dans un registre;
- comparaison de chaque paire de suites adjacentes de binaires 1 et 0 mémorisés à une combinaison de binaires prédéterminée correspondante afin d'établir un vote;
- évaluation du nombre de votes obtenus dans l'étape précédente afin de détecter la marque de secteur.

7. Procédé selon la revendication 6, dans lequel l'étape d'évaluation comprend la définition au préalable d'un nombre seuil de votes constituant une détection de marque de secteur.

8. Appareil de détection asynchrone d'une marque de secteur ayant une combinaison prédéterminée de binaires parmi les binaires lus à partir d'une piste de disque optique (12), comprenant :
- un registre à décalage (58);
- un moyen pour recevoir ces binaires lus à partir de la piste du disque optique, ignorer les binaires d'angle au niveau des transitions entre les séries adjacentes de binaires 1 et de binaires 0 et mémoriser les binaires restants dans ce registre à décalage;
- des moyens (60, 60a) pour comparer les suites adjacentes de binaires 1 et 0 mémorisés aux combinaisons de binaires correspondantes et, en réponse, fournir des signaux de sortie particuliers; et
- un ensemble de circuits de vote (62) pour fournir un signal établi de marque de secteur selon les signaux de sortie obtenus à partir du moyen de comparaison.

9. Appareil selon la revendication 8, dans lequel l'ensemble de circuits logiques de vote est programmable afin d'établir le signal de marque de secteur en réponse à un nombre prédéterminé de correspondances détectées par le moyen de comparaison.

10. Appareil selon la revendication 8, dans lequel le premier moyen cité ignore une partie terminale de la combinaison lue à partir de la piste du disque optique.

11. Appareil selon la revendication 8, dans lequel la combinaison lue à partir du disque optique est une combinaison à 80 binaires et le registre comprend 68 étages.

12. Appareil selon la revendication 9, dans lequel les signaux de sortie particuliers comprennent cinq signaux et l'ensemble de circuits logiques de votes peut être programmé pour considérer suffisants 3/5 ou 4/5 de correspondances de votes.
